Europäisches Patentamt

European Patent Office

Office européen des brevets

(19)

(11) Publication number: **0 021 733**
**B1**

(12) # EUROPEAN PATENT SPECIFICATION

(45) Date of publication of patent specification: **08.06.83**

(21) Application number: **80301978.5**

(22) Date of filing: **12.06.80**

(51) Int. Cl.³: **F 16 C 33/80,**
**F 16 J 15/44, B 62 M 9/10,**
**B 60 B 27/02**

(54) **Cycle hubs.**

(30) Priority: **20.06.79 JP 85325/79 U**

(43) Date of publication of application:
**07.01.81 Bulletin 81/1**

(45) Publication of the grant of the patent:
**08.06.83 Bulletin 83/23**

(84) Designated Contracting States:
**DE FR GB IT NL**

(56) References cited:
**AU - B - 500 327**
**DE - C - 384 910**
**FR - A - 439 411**
**FR - A - 547 175**
**FR - A - 893 781**
**FR - A - 992 460**
**FR - A - 1 067 711**
**FR - A - 1 208 766**
**FR - A - 1 359 386**
**FR - A - 2 040 896**
**FR - A - 2 175 477**
**GB - A - 185 127**
**GB - A - 191 708**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-Cho, Minami-machi**
**Midorigaoka Sakai-Shi Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England

Cycle hubs

This invention relates to a cycle hub comprising a hub shaft and a hub shell rotatably supported on said hub shaft through a pair of bearing means, each said bearing means comprising a ball holder in screw threaded engagement with the hub shaft, and a ball race with a plurality of balls therebetween, and being provided with a sealing means comprising first and second generally ring-shaped, sealing members secured to the hub shell and hub shaft respectively, and with radially inwardly and radially outwardly, respectively, extending projections having axially opposed portions in closely spaced proximity for substantially sealing the bearing means from the exterior whilst permitting free relative rotation between said first and second sealing members.

Such a device is known from FR—A—547175 in which a sealing member is mounted on a hub shaft adjacent a ball holder. The ball holder and said sealing member are formed with diametrically opposed male portions and diametrically opposed female portions, respectively, said portions being matingly engageable for rotation of said sealing member together with said ball holder whilst permitting free relative axial movement therebetween. This prior disclosure is primarily concerned with facilitating adjustment of the bearing components and the relative disposition of the sealing members is not controlled through the positioning of the ball holder.

In practice the bearing means on cycle hubs are usually sealed with the aid of a ring-shaped sealing member formed of a flexible material and mounted on the hub shaft or hub shell, so that the sealing member closes a gap between the stationary member and the rotary member, thereby preventing dust or rain water from entering the bearing means.

Sealing members of this type of construction are, however, more or less in contact, at their inner or outer periphery, with the rotary member or stationary member thereby resulting in incomplete sealing and/or increased frictional resistance. As a result, not only is smooth and light rotation of the rotating member hindered but also wear of the sealing member results in the need for replacement of the sealing member after a relatively short time and incomplete sealing.

It is an object of the present invention to minimise one or more of the above-mentioned disadvantages.

The present invention provides a cycle hub comprising a hub shaft and a hub shell rotatably supported on said hub shaft through a pair of bearing means, each said bearing means comprising a ball holder, in screw threaded engagement with the hub shaft, and a ball race with a plurality of balls therebetween, and being provided with a sealing means comprising at least two, first and second, generally ring-shaped sealing members secured to the hub shell and hub shaft respectively and with radially inwardly and radially outwardly, respectively, extending projections having axially opposed portions in closely spaced proximity for substantially sealing the bearing means from the exterior whilst permitting free relative rotation between said first and second sealing members characterised in that each said ball holder has an axially outwardly extending portion on which the or each respective second sealing member is substantially wholly supported and to which it is secured whereby axial positional adjustment of said ball holder automatically produces corresponding axial positional adjustment of said second sealing member(s).

With the alternate disposition of the projections of the first and second sealing members in the cycle hub a gap between the stationary member and the rotary member is substantially sealed leaving only a narrow, zig-zag and annular, labyrinthine passage which prevents dust or rain water from entering the bearing means from the exterior. At the same time since the first and second sealing members do not contact each other or that one of the stationary and rotary members other than that to which the respective sealing member is attached, freedom of relative rotation of the members is maintained and no significant additional frictional resistance obtained.

Further preferred features of the present invention will appear from the following description given by way of example of a preferred embodiment illustrated with reference to the accompanying drawings in which:

Fig. 1 is a partially sectioned front elevation showing a cycle hub having a sealing means in accordance with the invention;

Fig. 2 is a sectional view taken on the line II—II in Fig. 1; and

Fig. 3 is a detail sectional view corresponding to Fig. 1 on an enlarged scale.

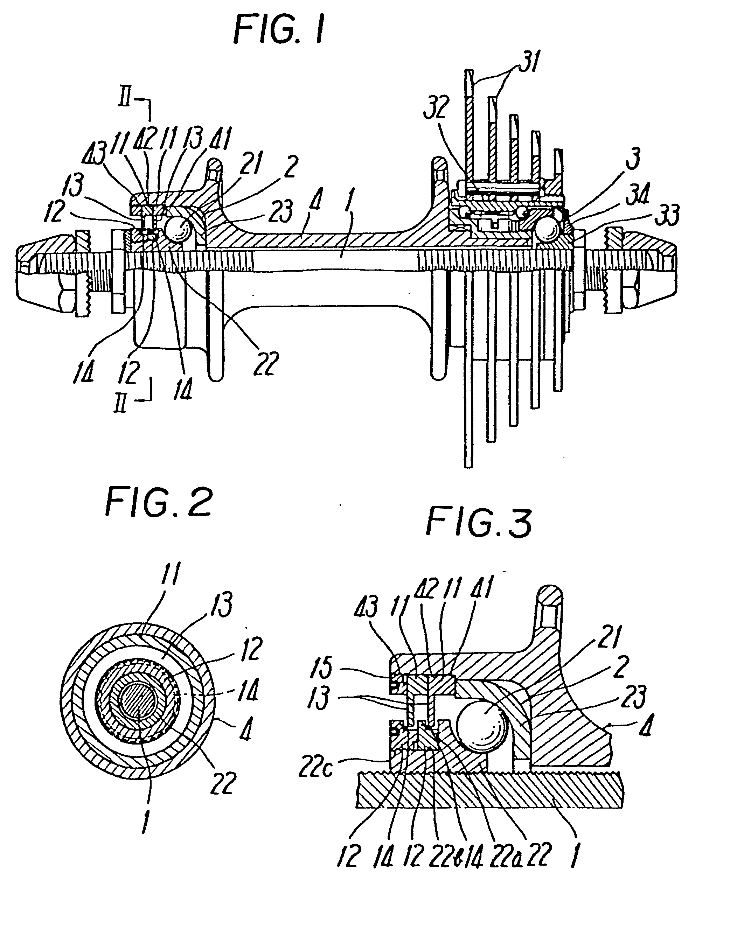

In the drawings is shown an embodiment of a cycle hub having a sealing means in accordance with the present invention. Fig. 1 shows a hub shell 4 rotatably supported on a hub shaft 1 through a pair of first and second bearing means 2 and 3.

In detail, a sealing assembly is used for sealing the gap between the hub shell 4 and part of the hub shaft 1 positioned axially outwardly (leftwards in the drawings) of the bearing means 2, which comprises balls 21, a ball holder 22 and a ball race 23 press-fitted on the hub shaft 1, in order to protect the bearing means 2 against the ingress of foreign material.

The sealing assembly comprises, in combination, two or more, generally ring-shaped first sealing means and generally ring-shaped second sealing means. In the illustrated embodiment the first sealing means has two first sealing members 11 and the second sealing means has two second sealing members 12. Each of the first sealing members 11 is larger in external diameter than the second sealing members 12 and has an annular projection constituting a projecting seal means 13 extending radially inwardly from the inner periphery of a sealing body means of said sealing member 11, said projecting seal means 13 being smaller in axial thickness than the sealing body means of said first sealing member 11 and having an internal diameter slightly larger than the outer diameter of a sealing body means of the second sealing member 12. Each sealing body means of a said second sealing member 12 is smaller in external diameter than the internal diameter of the projecting seal means 13 of an associated first sealing member 11 but has a projecting seal means 14 extending radially outwardly from the outer periphery of the sealing body means of said second sealing member 12. The projecting seal means 14 of the second sealing members 12 are smaller in axial thickness than the sealing body means of the second sealing members 12 and have an outer diameter larger than the internal diameter of said first projecting seal means 13 of said first sealing members 11.

The sealing assembly in the cycle hub of the invention is applied to the hub in such a manner that each first sealing member 11, has an outer diameter which is a close fit inside the inner periphery of the hub shell 4 and is held in said inner periphery thereof. Each second sealing member 12 has an inner diameter which is a close fit around an outer diameter of the ball holder 22, which is screw threadedly engaged with the hub shaft 1, and sleeved onto the outer periphery of the ball holder 22. The sealing members 11, 12 are arranged so that the projecting seal means 13, 14 alternate with each other in the rotational axial direction of the hub shaft 1 and partially overlap.

The sealing members 11 and 12 are each made mainly from metal or hard synthetic resin and are mounted alternately one after another on the hub shell 4 and ball holder 22. They may be retained in position on the hub shell 4 and ball holder 22 by means of screw-threaded engagement therewith, push-fit engagement therewith, bonding thereto, or with the aid of a retaining means such as a snap ring.

The hub shell 4, as may be seen in Fig. 3, is provided at its inner periphery with a stepped portion 41 extending from an axially outwardly facing shoulder, a fixing portion 42 adjacent thereto, and a screw threaded portion 43 at the axially outward end of the inner periphery, so that a first said first sealing member 11 can be inserted into the hub shell 4 to locate in the stepped portion 41 in contact with the end face of the ball race 23, and a further said first sealing member 11 is inserted in the hub shell in said fixing portion 42 and is retained in position by a screw threaded ring 15 which engages with the screw-threaded portion 43. As the ring 15 is screwed in, it drives the first sealing members 11 towards the stepped portion 41 and tightly clamps them against the end face of the ball race 23. The ball holder 22, as shown in Fig. 3, is provided at its outer periphery with a stepped portion 22a extending from an axially outwardly facing shoulder, a fixing portion 22b adjacent thereto and extending axially outwardly therefrom, and a screw-threaded portion 22c at the axially outward end of the outer periphery, so that a first second sealing member 12 can be inserted onto the ball holder 22 and disposed on the fixing portion 22b in contact with the stepped portion 22a and then a further second sealing member 12 having an internal screw thread is screwed onto the screw-threaded portion 22c, thereby urging and clamping the first second sealing member 12 (together with any additional ones) towards and against the stepped portion 22a.

The first and second sealing members 11 and 12 are mounted on the hub alternately one after another as described above so that each first sealing member projecting seal means 13 is axially opposite at least one second sealing member projecting seal means 14 at a minimum axial spacing, thereby forming a zig-zag passage between the first and second sealing members 11 and 12 and the projecting seal means 13 and 14 thereof.

Thus the gap between the hub shell 4 and the ball holder 22 can be substantially closed and a labyrinth effect obtained with a narrow passage remaining therebetween to substantially prevent dust or rain water from entering the interior of the bearing means 2 from the outside.

In other words, dust or rain water or other foreign material, when tending to enter the bearing means 2, has to first pass through the narrow passage between the projecting seal means 13 and 14 at the axially outermost position on the hub shaft 1. Most of the dust or rain water is actually prevented from entering at this stage. Any dust or rain water, which has passed through the above passage, must then pass through a further narrow passage between the first sealing member projecting seal means 13 and the outer periphery of the sealing body means of the second sealing member 12 and then through a succeeding narrow passage between the first sealing member projecting seal means 13 and the next projecting seal means 14 of a second sealing member 12 on the axially inward side thereof.

By making the above passage of zig-zag form rather than straight, resistance to entry of dust or rain water is increased thereby ensuring that dust or rain water is substantially prevented from penetrating through to the bearing means 2 at the innermost side of the sealing assembly. On the other hand since the projecting seal means 13 and 14 are not in contact with each other or any other part of the sealing members 12 and 11, the hub shell 4 can rotate freely without hindrance from the above described sealing means.

It will be appreciated that the first sealing members 11 could alternatively be mounted on an extension extending axially outwardly from a bearing means portion comprising a said ball race 23 which is fixed to the hub shell 4.

Although the above embodiment has been described with reference to only the axially left side of the hub shell 4 shown in the drawings, such a construction is also used with the right side bearing means.

The hub shown in Fig. 1 is provided at its right side with a drive member 32 having sprockets 31, and the first sealing means (not shown) is mounted on the inner periphery of the drive member 32 and second sealing means (not shown) on the outer periphery of a ball holder 33 of a bearing means 3 screw-threadedly mounted on the hub shaft 1, in similar manner to that described above for the left side of the hub. Incidentally, in Fig. 1, a conventional sealing member 34 of flexible material is shown mounted on the ball holder 33.

The projecting seal means 13, 14 are formed integrally with the respective first and second sealing body means of the first and second sealing members 11 and 12 in the above described embodiment, but, as an alternative, could be formed separately from the first and second sealing body means. In this latter case, the separate projecting seal means 13 and 14 could be mounted between the first and second sealing body means so as to be sandwiched between them.

By having two or more ring-shaped first and second sealing means arranged to have respective first and second projecting seal means mounted alternately, one after another, and at least partly axially opposite to each other, a narrow zig-zag passage is formed therebetween. The resulting labyrinth-form narrow passage obtained can substantially prevent dust or rain water from entering the bearing means. Since the first and second sealing means do not make contact with each other, the freedom of rotation of the rotary member is unimpaired thereby providing a further useful advantage in comparison with conventional seals.

## Claims

1. A cycle hub comprising a hub shaft (1) and a hub shell (4) rotatably supported on said hub shaft (1) through a pair of bearing means (2, 3), each said bearing means comprising a ball holder (22, 33) in screw-threaded engagement with the hub shaft (1), and a ball race (23) with a plurality of balls (21) therebetween, and being provided with a sealing means comprising at least two, first and second, generally ring-shaped sealing members (11, 12) secured to the hub shell (4) and hub shaft (1) respectively and with radially inwardly and radially outwardly, respectively, extending projections (13, 14) having axially opposed portions in closely spaced proximity for substantially sealing the bearing means from the exterior whilst permitting free relative rotation between said first and second sealing members (11, 12) characterized in that each said ball holder (22, 33) has an axially outwardly extending portion (22b) on which the or each respective second sealing member (12) is substantially wholly supported and to which it is secured whereby axial positional adjustment of said ball holder (22, 33) automatically produces corresponding axial positional adjustment of said second sealing member(s) (12).

2. A cycle hub according to Claim 1, wherein each of said sealing member projections (13, 14) is formed integrally with the main body of the respective first or second sealing member (11, 12).

3. A cycle hub according to Claim 1, wherein when said sealing member projections (13, 14) are formed separately from the respective sealing member main body, said projections (13, 14) are formed and arranged so as to be secured in position adjacent the respective sealing member main body by the fixing of said first and second sealing means to said hub shell (4) and ball holder (22, 33) on said hub shaft (1), respectively.

4. A cycle hub according to any one of Claims 1 to 3 wherein each of said first and second sealing members (11, 12) has a screw threaded portion engageable with a complementary screw threaded portion provided on said hub shell (4) or said ball holder (22, 33) on said shaft (1), respectively.

5. A cycle hub according to any one of Claims 1 to 4, wherein each of said hub shell (4) and ball holder (22, 33) on said hub shaft (1) has a fixing portion (43, 22c) for supporting a respective one of said first and second sealing members (11, 12).

6. A cycle hub according to any one of Claims 1 to 5 wherein each said first sealing members (11) is supported on the radially inner periphery of said hub shell (4).

7. A cycle hub according to any one of Claims 1 to 6 wherein each said bearing means sealing means comprises two said first sealing members (11) secured to the hub shell (4) and two said second sealing members (12) secured to said ball holder (22, 33) on said hub shaft (1).

## Patentansprüche

1. Fahrradnabe, welche aus einer Nabenwelle (1) und einem auf dieser über ein Paar Lagermittel (2, 3) drehbar abgestützten Nabenmantel (4), wobei diese Lagermittel jeweils einen Kugelhalter (22, 33) in Gewindeeingriff mit der Nabenwelle (1) umfassen, sowie einem Kugelkäfig (23) mit einer Mehrzahl Kugeln (21) dazwischen besteht und mit Abdichtungsmitteln versehen ist, welche aus mindestens zwei ersten und zweiten, allgemein ringförmigen Abdichtungsgliedern (11, 12) bestehen, welche an dem Nabenmantel (4) bzw. der Nabenwelle (1) befestigt sind und sich radial nach innen bzw. radial nach aussen erstreckende Vorsprünge (13, 14) mit axial in geringem Abstand gegenüberliegenden Teilen aufweisen, um die Lagermittel im wesentlichen von der Umgebung abzudichten und dabei eine freie Relativdrehung zwischen diesen ersten und zweiten Abdichtungsgliedern (11, 12) zuzulassen, dadurch gekennzeichnet, dass jeder Kugelhalter (22, 33) einen sich axial nach aussen erstreckenden Teil (22b) aufweist, auf dem sich das bzw. jedes zweite Abdichtungsglied (12) im wesentlichen vollständig abstützt und darauf befestigt ist, wodurch eine axiale Verstellung dieses Kugelhalters (22, 33) automatisch eine entsprechende axiale Verstellung dieses bzw. dieser zweiten Abdichtungsglieds bzw. -glieder (12) zur Folge hat.

2. Fahrradnabe nach Anspruch 1, worin diese Abdichtungsgliedvorsprünge (13, 14) jeweils einstückig mit dem Hauptkörper des entsprechenden ersten bzw. zweiten Abdichtungsglieds (11, 12) ausgebildet sind.

3. Fahrradnabe nach Anspruch 1, worin bei von dem entsprechenden Abdichtungsgliedhauptkörper getrennter Ausbildung dieser Abdichtungsgliedvorsprünge (13, 14) diese so ausgebildet und angeordnet sind, dass sie durch Befestigung dieser ersten bzw. zweiten Abdichtungsglieder an jenem Nabenmantel (4) bzw. des Kugelhalters (22, 33) an jener Nabenwelle (1) in ihrer Stellung neben dem entsprechenden Abdichtungsgliedhauptkörper festgelegt sind.

4. Fahrradnabe nach einem der Ansprüche 1 bis 3, worin diese ersten bzw. zweiten Abdichtungsglieder (11, 12) jeweils einen Gewindeteil aufweisen, der mit einem auf jenem Nabenmantel (4) bzw. jenem Kugelhalter (22, 33) auf jener Welle (1) vorgesehenen, komplementären Gewindeteil in Eingriff kommen kann.

5. Fahrradnabe nach einem der Ansprüche 1 bis 4, worin dieser Nabenmantel (4) und Kugelhalter (22, 33) auf dieser Nabenwelle (1) jeweils einen Befestigungsteil (43, 22c) zur Abstützung eines entsprechenden ersten bzw. zweiten Abdichtungsglieds (11, 12) aufweisen.

6. Fahrradnabe nach einem der Ansprüche 1 bis 5, worin diese ersten Abdichtungsglieder (11) jeweils auf dem radial inneren Umfang dieses Nabenmantels (4) abgestützt sind.

7. Fahrradnabe nach einem der Ansprüche 1 bis 6, worin diese Abdichtungsmittel für die Lagermittel jeweils zwei erste solche, am Nabenmantel (4) befestigte Abdichtungsglieder (11) und zwei zweite solche, an jenem Kugelhalter (22, 33) auf jener Nabenwelle (1) befestigte Abdichtungsglieder (12) umfassen.

**Revendications**

1. Moyeu pour cycle qui comprend un arbre de moyeu (1) et une virole de moyeu (4) supportée en rotation sur l'arbre de moyeu (1) par l'intermédiaire de deux paliers (2, 3), chacun de ces paliers comprenant une cage à billes (22, 33) vissée sur l'arbre de moyeu (1) et un chemin de roulement (23), une pluralité de billes (21) étant placées entre ce chemin et la cave, et qui comprend en outre des moyens d'étanchéité comportant au moins deux — une première et une deuxième — pièces d'étanchéité (11, 12) sensiblement annulaires, fixées à la virole de moyeu (4) et à l'arbre de moyeu (1) respectivement, ces pièces comportant des éléments saillants (13, 14) qui s'étendent respectivement radialement vers l'intérieur et radialement vers l'extérieur et qui présentent des parties axialement opposées à faible distance les unes des autres, de manière à isoler sensiblement les paliers de l'extérieur tout en permettant une rotation relative libre entre les première deuxième pièces d'étanchéité (11, 12), ledit moyeu étant caractérisé en ce que chaque cage à billes (22, 23) comporte une partie (22b), s'étendant axialement vers l'extérieur, sur laquelle la ou chaque deuxième pièce d'étanchéité respective (12) est supportée sensiblement complètement et à laquelle elle est fixée, de sorte que le réglage de la position axiale de la cage à billes (22, 33) provoque automatiquement le réglage correspondant de la position axiale de la ou de chaque deuxième pièce d'étanchéité (12).

2. Moyeu pour cycle suivant la revendication 1, caractérisé en ce que chacun des éléments saillants (13, 14) des pièces d'étanchéité est formé solidairement avec le corps principal des première et deuxième pièces d'étanchéité respectives (11, 12).

3. Moyeu pour cycle suivant la revendication 1, caractérisé en ce que, lorsque les éléments saillants (13, 14) des pièces d'étanchéité sont formés séparément du corps principal de la pièce d'étanchéité respective, les dits éléments saillants (13, 14) sont formés et agancés de manière à être fixés en position adjacente au corps principal de la pièce d'étanchéité respective, par la fixation des premiers et deuxièmes moyens d'étanchéité à la virole de moyeu (4) et à la cage à billes (22, 23) sur l'arbre de moyeu (1), respectivement.

4. Moyeu pour cycle suivant l'une quelconque des revendications 1 à 3, caractérisé en ce que chacune des première et deuxième pièces d'étanchéité (11, 12) comporte une partie filetée qui peut venir en prise avec une partie filetée complémentaire prévue sur la virole de moyeu (4) ou la cage à billes (22, 33) sur l'arbre (1), respectivement.

5. Moyeu pour cycle suivant l'une quelconque des revendications 1 à 4, caractérisé en ce que la virole de moyeu (4) et la cage à billes (22, 33) sur l'arbre de moyeu (1) comportent chacune une partie de fixation (43, 22c) pour supporter respectivement l'une des première ou deuxième pièces d'étanchéité (11, 12).

6. Moyeu pour cycle suivant l'une quelconque des revendications 1 à 5, caractérisé en ce que chaque première pièce d'étanchéité (11) est supportée sur la périphérie radialement interne de la virole de moyeu (4).

7. Moyeu pour cycle suivant l'une quelconque des revendications 1 à 6, caractérisé en ce que chacun des dits moyens d'étanchéité de palier comprend deux dites premières pièces d'étanchéité (11), fixées à la virole de moyeu (4), et deux dites deuxièmes pièces d'étanchéité (12), fixées à la cage à billes (22, 33) sur l'arbre de moyeu (1).

# FIG. 1

# FIG. 2

# FIG. 3